Europäisches Patentamt

European Patent Office

Office européen des brevets

(11) Publication number: **0 258 512**
**A1**

## EUROPEAN PATENT APPLICATION

(21) Application number: **86309769.7**

(22) Date of filing: **15.12.86**

(51) Int. Cl.⁴: **A61C 17/032** , F16K 31/38 ,
F16K 11/14

(30) Priority: **05.09.86 US 904716**

(43) Date of publication of application:
**09.03.88 Bulletin 88/10**

(84) Designated Contracting States:
**CH DE ES FR GB IT LI NL SE**

(71) Applicant: **International Fluid Systems Ltd.**
**12 St. Catherine Street**
**Cupar Scotland(GB)**

(72) Inventor: **Nicholson, Trevor**
**1371 SE 3rd Terrace**
**Pompano Beach, Florida 33060(US)**

(74) Representative: **Szczuka, Jan Tymoteusz et al**
**Cruikshank & Fairweather 19 Royal**
**Exchange Square**
**Glasgow G1 3AE Scotland(GB)**

(54) **Unloader valve.**

(57) An unloader device for fluid systems comprising in a housing 11, (or 51) an inlet passageway 12 (or 52), an outlet passageway 12 (or 53) connected to the inlet passageway 12 (or 52), and a bypass passageway 14, 27 (or 54) connected to the inlet passageway 12 (or 52), characterized by a piston 15 (or 55) movable within the outlet passageway 13 (or 53), a channel 17 (or 57) which extends through the piston 15 so as to connect the inlet and outlet passageways, a bypass valve 23 (or 59) spaced within the bypass passageway 14, 17 (or 54) and means 19 (or 58) for transmitting movement from the piston 15 (or 55), to the bypass valve 23 ( or 59), the piston 15 (or 55) being subjected on one side to the pressure of the outlet passageway 13 (or 53) and on the other side to the pressure of the inlet passageway 12 (or 52), so that differential pressure in the outlet passageway 13 (or 53) causes the piston 15 (or 55) to move, which movement is transmitted by the means 19 (or 58) so as to cause the bypass valve 23 (or 59) to move so as to connect the inlet passageway 12 (or 52) with the bypass passageway 14( 27 or 54).

F/G.1

## UNLOADER VALVE

This invention relates to an unloader valve. In particular it relates to a novel unloader valve which does not require a spring. This invention also relates to the application of the unloader valve of this invention to a novel teeth cleaning device.

United States patent 4,481,968 describes a regulator-unloader which is typical of the most recent prior art. In this patent there is an inlet passageway, an outlet passageway connected to the inlet, a piston movable in the outlet, an outlet valve connected to the inlet passageway and to the outlet passageway, a bypass passageway connected to the inlet passageway, and a main bypass valve. The valve is located in the bypass passageway. A rod in the inlet passageway is connected at one end to the piston and at the other end to the bypass valve, the rod being pivotably mounted and the housing at a point intermediate its ends. The valves of the regulator-unloader described in this patent require springs.

In order to maintain valves and equipment in trouble free condition for a long period of time, it is desirable to avoid the use of springs. Also, it is desirable to increase the range in both directions of pressures of equipment with which bypass valves can be used.

One object of the present invention is to provide an unloader valve which does not require springs. Other objects and advantages of this invention will be apparent from the description and claims which follow taken together with the appended drawings.

### Brief Description of Drawings

Fig. 1 is a longitudinal cross section of one embodiment of this invention.

Fig. 2 is a section along line 2-2 of Fig. 1.

Fig. 3 is a similar view as in Fig. 1, but in the bypass condition.

Fig. 4 is another embodiment of this invention wherein there is neither a rod nor a spring.

Fig. 5 is a cross section similar to Fig. 4 in the bypass 5 mode.

Fig. 6 is an aqueous tooth cleaning device utilizing the unloader valve of Figs. 4 and 5.

Fig. 7 is a cross sectional view of another design of teeth cleaning device utilizing the unloader valve of Figs. 4 and 5.

Fig. 8 is another embodiment of an aqueous tooth cleaning device employing the bypass valve of Figs. 4 and 5.

### Summary of Invention

The invention comprises generally an unloader device for fluid systems comprising in a housing 11, (or 51) an inlet passageway 12 (or 52), an outlet passageway 12 (or 53) connected to the inlet passageway 12 (or 52), and a bypass passageway 14, 27 (or 54) connected to the inlet passageway 12 (or 52). A piston 15 (or 55) is movable within the outlet passageway 13 (or 53), and has a channel 17 (or 57) which extends through the piston 15 so as to connect the inlet and outlet passageways. A bypass valve 23 (or 59) is spaced within the bypass passageway 14, 17 (or 54) and and there is means 19 (or 58) for transmitting movement from the piston 15 (or 55), to the bypass valve 12, or 59. The piston 15 (or 55) is subjected on one side to the pressure of the outlet passageway 13 (or 53) and on the other side to the pressure of the inlet passageway 12 (or 52), so that differential pressure in the outlet passageway 13 (or 53) causes the piston 15 (or 55) to move, which movement is transmitted by the means 19 (or 58) so as to cause the bypass valve 23 (or 59) to move so as to connect the inlet passageway 12 (or 52) with the bypass passageway 14 (27 or 54).

The unloader valves of this invention can be used with many devices in which fluids are applied under pressure, including devices of high pressure such as liquid blasting equipment and devices of low pressure such as gum-cleaning apparatus.

### Specific Examples of Invention

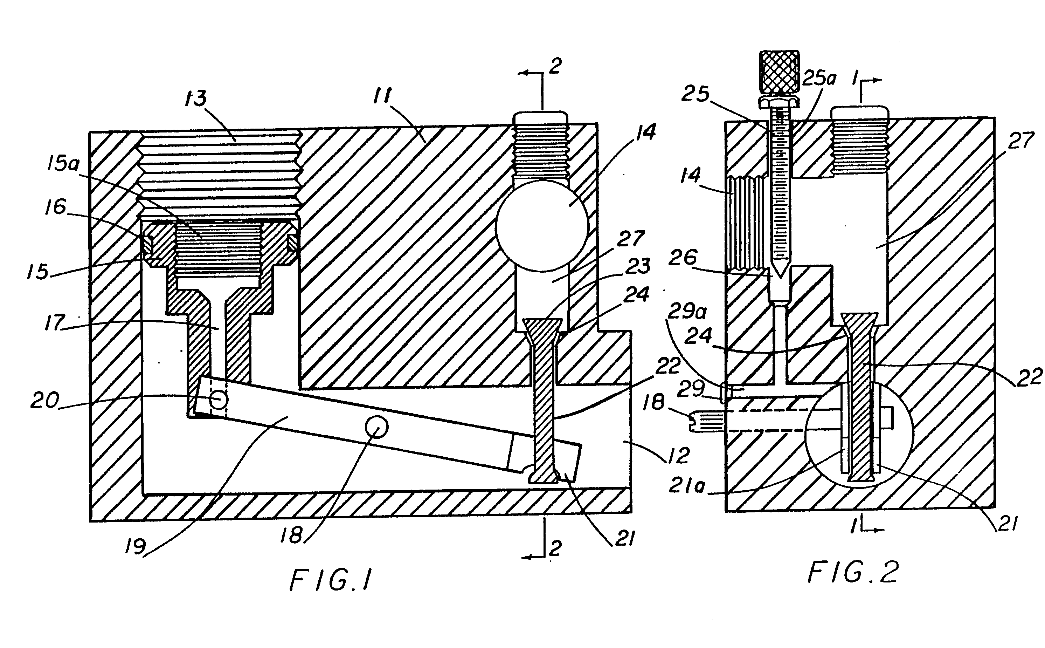

Referring now to the embodiment illustrated in Figs. 1, 2 and 3, there is disclosed therein a block 11 with an inlet opening 12 for water or aqueous mixture under pressure. Outlet opening 13 is provided which is connected to the application device such as a spray gun. The block also has a bypass opening 14 which is connected with a drain and with bypass chamber 27.

In outlet opening 13 is a piston 15 which moves vertically within the opening. Piston 15 has a threaded central opening 15a which permits the insertion of a plug so that the opening can be of desired diameter. An important feature of this insertion is a channel 17 in the piston which extends the entire length of the piston and so that there is constant connection between the outlet 13 and the inlet 12. O-ring 16 seals the piston within the outlet opening chamber 13.

Piston 15 is connected by a pivot pin 20 to a rod 19 which pivots on fulcrum pin 18 mounted in the body. The other end of the rod 19 has an opening through which the stem of bypass valve member 22 is connected. Thus, when position 15 is lowered by increase in pressure at the outlet caused by shutting off the trigger in the spray gun, bypass valve 22 is raised. The valve 23 seals the channel 24 between the inlet opening 12 and bypass chamber 27.

An adjustable needle valve 25 is provided which is held on threaded opening 25a and arranged to help control the threshold pressure between bypass chamber 27 and inlet opening 12. A channel is provided for the operation of the adjustable needle valve 25. Channel 29a connects chamber 26 to chamber 12. The selection of the appropriate diameter of channel 17 and amount of insertion of needle valve 25 gives a wide range of control of threshold pressure for activating the bypass.

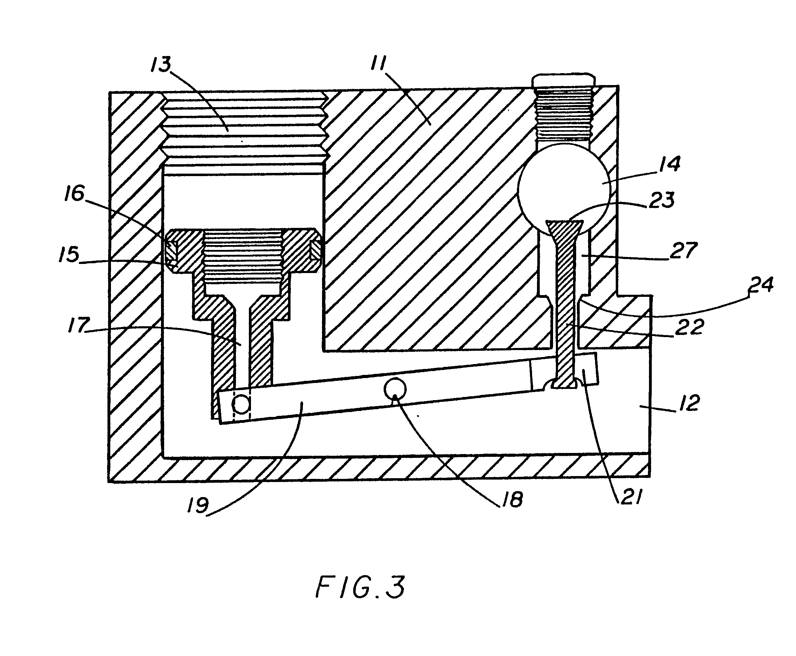

As can be seen by comparing Figs. 1 and 3, as the pressure on piston 15 is increased above the selected threshold, the piston goes down causing the bypass valve 22 to open. When the pressure has decreased below the threshold, inlet pressure in chamber 12· now causes the piston to rise and bypass valve 23 to close.

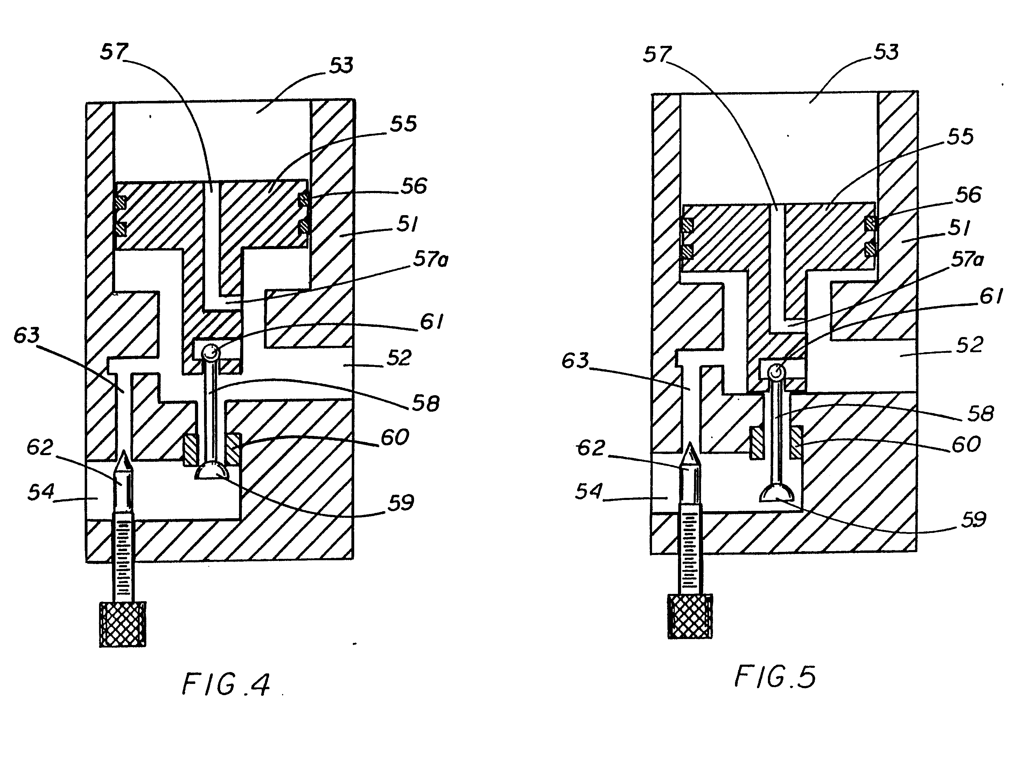

Another embodiment of this invention illustrated in Figs. 4 and 5 is springless but has no rod connecting the piston with the bypass valve. The body 51 has an inlet opening and chamber 52, an outlet opening and chamber 53, and a bypass opening 54. Spaced within outlet opening chamber 53 is a piston 55 movable in chamber 53 and having a central channel 57 which communicates with both the inlet opening and the outlet opening at all times. This is a similar feature as in the embodiment exemplified by Figs. 1, 2 and 3. In this instance, channel 57 instead of going straight down vertically, angles to the side and at the base of piston 55 is a notch which holds and suspends the bypass valve stem 58 by means of an enlarged ball end 61. The other end of valve stem 58 is bypass valve 59 which seats in the opening 60 which connects the inlet 52 with the bypass chamber 54. Thus, when there is movement of the piston 55 downward, as in Fig. 5, caused by excess back pressure when an application device is suddenly shut off, valve 59 is lowered so that the bypass chamber 54 is now connected to the inlet chamber 52.

Control of the sensitivity of the bypass is accomplished with an adjustable needle valve 62 sealed with O-rings which adjusts the opening of a channel 63 which runs between inlet channel 52 and bypass channel 54. Piston 55 is equipped with O-ring seals 56 and its central opening can also be made adjustable by using threaded pieces. There are thus two adjustments that can be made, one needle valve, 62 and the other by means of narrowing or enlarging the opening of the channel 57 which extends through the piston and connects the outlet opening 53 with the inlet opening 52. This permits the suitable control of the threshold pressure for activating the bypass.

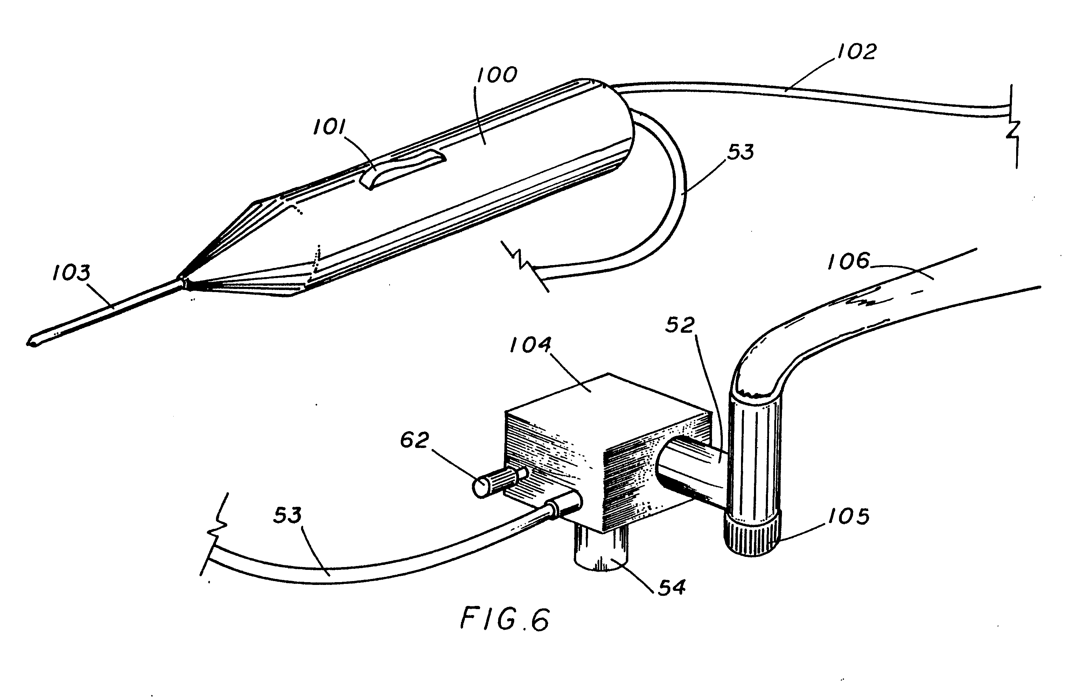

A particular application of this second embodiment of this invention is in gum cleaning devices connected to a water faucet. As shown in Fig. 6 a control unit 104 is provided containing the bypass valve assembly with the needle valve 62, outlet 53, inlet 52 and bypass drain 54, the unit being connected to a diverter valve 105 on a water faucet 106. The outlet line 53 is connected to a hand-held gum cleaning device 100 containing a gum engaging outlet member 103 and a shut-off valve 101. An optional external mouthwash inlet line 102 is provided which can be connected to a separate source of mouthwash.

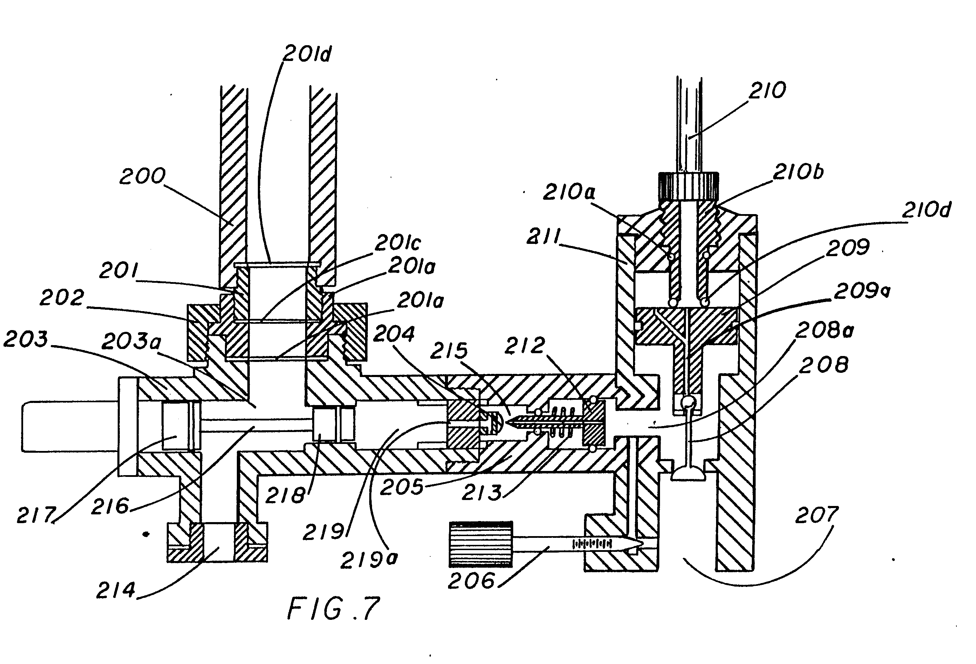

Another example of a gum cleaning device is illustrated schematically in Fig. 7. Connected to water faucet 200 is an adapter 201 with housing seal 201a, lock nut 202, flat rubber seals 201b and 201c for attachment to housing 203. Inlet 201d permits the water from the faucet to enter the diverter chamber 203a where it flows out through drain 214. When diverter piston 218 on yoke 216 is actuated by pressing button 217, water can now flow from inlet chamber 203a to inlet chamber 219. Inlet chamber 219 connects via channel 219a with flow chamber 215. The flow of water from chamber 219 to chamber 215 is regulated by regulator piston 212 and regulator seat 204 in conjunction with spring 213. Chamber 215 and piston 212 are housed in block 205 and piston 212 is housed in block 205 which provides a connecting passage to the bypass valve operating section. Water entering inlet chamber 208a flows through channel 209a in piston 209 to outlet chamber 210a then to outlet 210 in body 211. Bypass valve 208, suspended by piston 209, opens inlet chamber 208a to bypass outlet 207 when excess pressure causes the piston 209 to be lowered. Threshold pressure is regulated by threaded valve 206 which controls the opening 206a between chambers 208a and 207. Pulsation adjustment screw 210b is seated in the outlet 210 and body 211 with O-ring seals 210a and 210d.

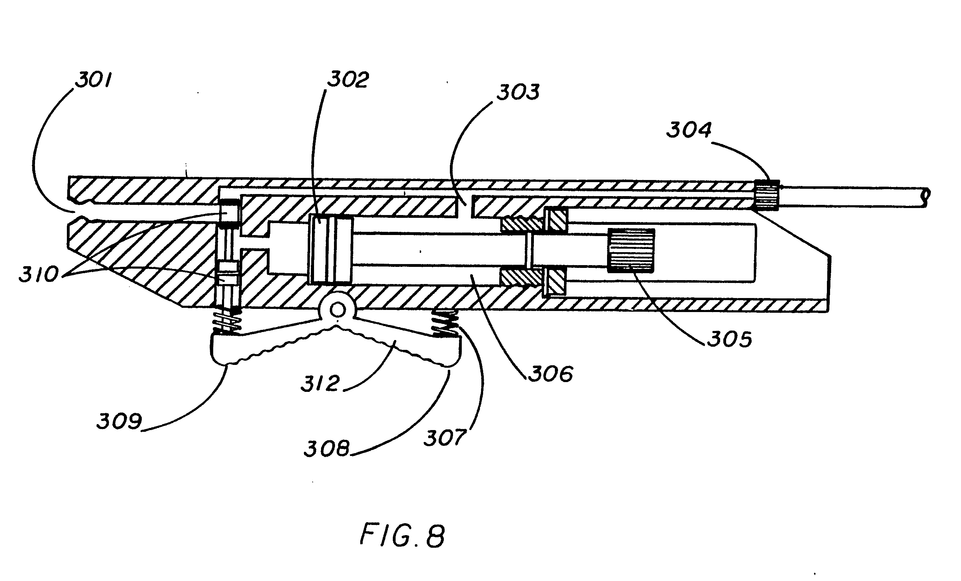

Fig. 8 illustrates a novel arrangement of a gum cleaning device controlled by the bypass valve arrangement of this invention. A diverter valve 310 is provided which is operated by pressing left side 309 of spring-loaded pivotable trigger 312 to permit entry of mouthwash into outlet 301. Water inlet 304 connects to outlet 301 and also through pressure inlet 303 to mouthwash chamber 306. Pressing the right side 308 of trigger operates the normal flow of water 304 to 301. When the trigger is released the spring 307 causes valve 310 to block the flow, thus actuating the bypass to which the inlet 304 is connected. The user thus has three control positions; off, water, or mouthwash.

The gum engaging outlet member of the gum cleaning devices of this invention, also known as wands, create the pulsating action in the combination with the unloader valve by making the nozzle or restriction sufficiently small. For example, where the diameter of the restriction on nozzle is approximately 0.025 inches in diameter with an inlet water pressure of 45 pounds PSI the bypass valve will open and close so as to give a pulsation in the range of ten to twenty pulses per second, where there has been proper adjustment with the pulsation adjustment screw 210 b.

## Claims

1. An unloader device for fluid systems comprising in a housing (11 or 51) an inlet passageway (12 or 52), an outlet passageway (12 or 53) connected to said inlet passageway (12 or 52), and a bypass passageway (14, 27 or 54) connected to said inlet passageway (12 or 52), characterized by a piston (15 or 55) movable within said outlet passageway (13 or 53), a channel (17 or 57) which extends through said piston (15) so as to connect said inlet and outlet passageways, a bypass valve (23 or 59) spaced within said bypass passageway (14, 17 or 54) and means (19 or 58) for transmitting movement from said piston (15 or 55) to said bypass (valve 23 or 59), said piston (15 or 55) being subjected on one side to the pressure of the outlet passageway (13 or 53) and on the other side to the pressure of the inlet passageway (12 or 52), so that differential pressure in the outlet passageway (13 or 53) causes said piston (15 or 55) to move, which movement is transmitted by said means (19 or 58) so as to cause said bypass valve (23 or 59) to move so as to connect or disconnect said inlet passageway (12 or 52) with said bypass passageway (14 27 or 54).

2. The device of Claim 1 wherein there is a channel (29a or 63) between said inlet chamber (12 or 52), in which an adjustable member (25 or 62) is positioned whereby adjustment of said member (25 or 62) controls the desired threshold pressure.

3. The device of Claim 1 wherein the diameter of said channel (17, or 57) can be adjusted.

4. The device of Claim 1 wherein said movement transmitting means is a rod (18) pivotally mounted on the housing (11) and connected on one side to piston (15) and on the other side to bypass valve (23), so that movement of the piston in one direction causes movement of the valve in the opposite direction.

5. The device of Claim 4 wherein said bypass passageway (24, 27) is so situated that upward movement of said bypass valve upon downward movement of said piston causes said bypass valve (23) to open.

6. The device of Claim 1 wherein said movement transmitting means is a rod (58) connected at one end to said piston (55) and at its other end to bypass valve (59) so that movement of said piston (55) in one direction causes movement of said rod (58) in the same direction.

7. The device of Claim 6 wherein said bypass passageway (54) is so situated that downward movement of said bypass valve upon downward movement of said piston causes said bypass valve (59) to open.

8. The combination of a gum cleaning device having an inlet and an outlet and being powered by a source of water under pressure and an unloader device as in Claim 1; the inlet passageway of said unloader device being connected to said source of water under pressure; the bypass passageway of the unloader device flowing into a drain; the outlet passageway of the unloader device being connected to the inlet of the gum-cleaning device.

9. The combination of Claim 8 wherein there is diverter means between the unloader inlet and source of water under pressure.

10. The combination of a gum cleaning device having an inlet and an outlet and being powered by a source of water under pressure and an unloader device as in Claim 6; the inlet passageway of said unloader device being connected to said source of water under pressure; the bypass passageway of the unloader device flowing into a drain; the outlet passageway of the unloader device being connected to the inlet of the gum-cleaning device.

11. An unloader water powered gum-cleaning device (100) containing a gum engaging outlet member (103), a shut off valve (101), an inlet line (53) and a mouthwash inlet line (102).

12. Claim 11 wherein inlet line (53) is connected to the outlet of an unloader device made in accordance with Claim 6 wherein diverter means are in line between a source of water under pressure (106) and the inlet (52).

13. An actuator for a gum-cleaning device attached to a source of water under pressure such as a water faucet (200), said device comprising an inlet (201d) connecting with a diverter chamber (203a) and then a drain (214); wherein a diverter piston (218) on yoke (216) is spaced in said chamber and is actuated by pressing button means (217) connected to said yoke (216); there being an inlet chamber (219) adjacent to inlet chamber (203a) whereby movement of said piston (218) connects said chambers, a flow chamber (215) having a channel (219a) connecting with flow chamber (219), and a spring-loaded regulator piston (212) adapted so as to close or open a connection between chamber (215) and the inlet (208a) of an unloader device made in accordance with Claim 6).

14. A gum-cleaning device adapted to be attached to an unloader device as in Claim 1 which in turn is connected to a source of water under pressure, comprising:

A housing (300) containing a water inlet (304), a channel (304a) connecting said water inlet (304) with water outlet (301) and via pressure inlet (303) to mouthwash chamber (306); said mouthwash chamber having a channel connecting with cavity (309); piston means (302) being spaced in chamber (306) to adjust the rate of flow of mouthwash from chamber (306) into chamber (309); trigger-operated piston means (310) being spaced in channel (304a) and chamber (309) so as to alternately permit flow of water from channel (304a) or mouthwash from chamber (306) into said outlet (301); said trigger means comprising a pivotable trigger having arms (308 and 309) on opposite sides; pressure on one arm (309) serving to block water in channel (304a) and open flow of mouthwash from chamber (306); pressure on the other arm (308) serving to block flow of mouthwash and open flow of water; said trigger being further characterized in that it is spring-loaded on both arms and serves to block both passageways when no pressure is applied to either arm.

15. The combination of Claim 10 wherein said outlet of said gum cleaning device has a nozzle or restriction sufficiently small so as to cause rapid opening and closing of the bypass valve thus creating a pulsating flow of water.

FIG.1

FIG.2

0 258 512

FIG.3

0 258 512

FIG.4

FIG.5

0 258 512

FIG.6

0 258 512

FIG.7

FIG.8

0 258 512

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| D,A | US - A - 4 481 968 (IVERSON) <br> * Claims 1-9; fig. 1-5 * <br> -- | 1,4-6 | A 61 C 17/032 <br> F 16 K 31/38 <br> F 16 K 11/14 |
| A | US - A - 2 779 290 (WIEGERS) <br> * Column 1, line 63 - column 2, line 28; fig. 2 * <br> -- | 1,4 | |
| A | US - A - 3 524 465 (SADLER) <br> * Totality * <br> -- | 1 | |
| A | EP - A2 - 0 102 724 (TELEDYNE INDUSTRIES, INC.) <br> * Totality * <br> ---- | 1 | |

TECHNICAL FIELDS SEARCHED (Int. Cl 4)

F 16 K 11/00

F 16 K 17/00

F 16 K 31/00

A 61 C 17/00

G 05 D  7/00

G 05 D 16/00

The present search report has been drawn up for all claims

| Place of search <br> VIENNA | Date of completion of the search <br> 30-11-1987 | Examiner <br> ROUSSARIAN |
|---|---|---|